# FASCICULE DE BREVET EUROPEEN

(11) **EP 3 995 648 B1**
(45) Date de publication et mention de la délivrance du brevet: **13.03.2024**
(21) Numéro de dépôt: 21206635.1
(22) Date de dépôt: 05.11.2021
(51) Int. Cl.: E05B 15/02, E05C 1/10, E05B 65/06, E05B 65/00, A01K 1/00, A01K 3/00, E05B 63/04

(54) **STRUCTURE DE GÂCHE POUR DISPOSITIF DE VERROUILLAGE D'OUVRANT DE BARRIÈRE**
SCHLIESSBLECHSTRUKTUR FÜR EINE VERRIEGELUNGSVORRICHTUNG FÜR EINEN ÖFFNUNGSFLÜGEL MIT BARRIEREFUNKTION
LATCH STRUCTURE FOR LOCKING DEVICE OF OPENABLE SECTION OF A BARRIER

(30) Priorité: 06.11.2020 FR 2011418
(43) Date de publication de la demande: 11.05.2022
(73) Titulaire: Cosnet, 72550 Coulans-sur-Gée (FR)
(72) Inventeur: COSNET, Gilbert, 72550 COULANS-SUR-GÉE (FR)
(74) Mandataire: Jacobacci Coralis Harle

(56) Documents cités:
- FR-A1- 2 756 321
- FR-A1- 3 068 722
- US-A- 1 439 838

## Description

### Domaine technique de l'invention

La présente invention concerne une structure de gâche pour un dispositif de verrouillage d'ouvrant de barrière, lequel ouvrant de barrière est apte à pivoter autour d'un axe de pivotement, pour permettre son ouverture d'un côté et de l'autre d'au moins une position de fermeture.

Elle concerne également un dispositif de verrouillage d'ouvrant de barrière comprenant une telle structure de gâche.

Cette structure de gâche et ce dispositif de verrouillage peuvent avantageusement trouver application dans le domaine de l'élevage d'animaux, par exemple de bovins, pour la fermeture d'ouvrants de barrières d'enclos.

### Etat de la technique

Le document FR-3 068 722 décrit un dispositif de verrouillage qui permet la fermeture d'un ouvrant de barrière d'enclos dans les deux sens.

Le dispositif de verrouillage correspondant comprend une structure de pêne, solidaire de l'ouvrant de barrière, qui comprend un élément de verrouillage mobile entre une position déployée et une position rétractée pour permettre sa coopération avec une structure de gâche solidaire d'un poteau vertical formant le dormant de barrière.

La structure de gâche comprend - un organe de verrouillage en forme de logement destiné à coopérer avec l'élément de verrouillage de la structure de pêne pour retenir l'ouvrant de barrière en position de fermeture, et - un obstacle en forme de butée mobile entre deux positions extrêmes, configuré pour libérer un accès à l'organe de verrouillage depuis l'un ou l'autre des côtés du dormant, selon le sens de fermeture (horaire ou antihoraire) de l'ouvrant.

Cependant, une telle structure de gâche avec butée mobile comporte des éléments saillants dans la zone de passage à proximité, qui peuvent être gênants ou sources de blessures pour des animaux. Ces éléments saillants peuvent être associés à des organes de protection rapportés qui augmentent le nombre de pièces à gérer et qui génèrent des coûts supplémentaires.

En outre, le caractère mobile de cette butée complique la fabrication et la mise en oeuvre de la structure de gâche ; et cette butée constitue un élément de fragilité en utilisation, en particulier pour des applications dans le domaine de l'élevage d'animaux.

Les documents FR-2756321 et US-1439838 décrivent des structures de gâche pour un dispositif de verrouillage d'ouvrant de barrière, lesquelles structures de gâche consistent en une pièce monobloc qui comprend deux logements de pêne qui se prolongent latéralement par des rampes de guidage de pêne.

### Présentation de l'invention

Afin de remédier aux inconvénients précités de l'état de la technique, la présente invention propose une structure de gâche pour un dispositif de verrouillage d'ouvrant de barrière, telle que définie par la revendication 1.

On obtient ainsi une structure de gâche très simple et efficace, qui peut être prévue de grande résistance en particulier pour des applications à l'élevage d'animaux. Une telle structure de gâche présente encore peu d'éléments saillants, ce qui limite les risques de blessures ou de coupures pour les animaux.

D'autres caractéristiques non limitatives et avantageuses de la structure de gâche conforme à l'invention sont les suivantes :
- une partie au moins du moyen de butée fixe de la structure de gâche s'étend en saillie par rapport auxdits premier et second logements de pêne ;
- ledit moyen de butée fixe comprend une première partie constituant une bordure de logement dudit premier logement de pêne, et une seconde partie constituant une bordure de logement dudit second logement de pêne ;
- ledit moyen de butée fixe consiste en une platine de butée s'étendant dans un plan perpendiculaire au plan dudit plateau, laquelle platine de butée comprend une partie d'extrémité avant qui s'étend en saillie par rapport audit plateau et auxdits premier et second logements de pêne ;
- la structure de gâche comprend des moyens de fixation pour sa fixation sur un support.
- selon un mode de réalisation, lesdits moyens de fixation pour la fixation sur un support consistent en deux ailes latérales qui prolongent lesdits panneaux latéraux formant la première rampe de guidage de pêne et la seconde rampe de guidage de pêne, lesquelles ailes latérales s'étendent dans un même plan et sont munies chacune d'au moins un orifice adapté pour le passage d'une vis de fixation, en vue de la fixation sur un support en forme de paroi ou de mur ;
- selon un autre mode de réalisation, lesdits moyens de fixation pour la fixation sur un support consistent en une structure de bridage adaptée pour une fixation sur un poteau vertical, laquelle structure de bridage est formée d'une première demi-bride sur laquelle est fixée l'embase de gâche et d'une seconde demi-bride, lesquelles première et seconde demi-brides sont munies de moyens d'assemblage entre elles par boulonnage ; dans ce cas, de préférence, ladite platine de butée comprend une partie d'extrémité arrière fixée sur ladite première demi-bride.

La présente invention concerne encore un dispositif de verrouillage d'ouvrant de barrière, lequel ouvrant de barrière est apte à pivoter autour d'un axe de pivotement pour permettre son ouverture d'un côté et de l'autre d'au moins une position de fermeture, lequel dispositif de verrouillage comprend :
- une structure de gâche telle que définie ci-dessus, et
- une structure de pêne solidaire dudit ouvrant de barrière, laquelle structure de pêne comprend un élément de verrouillage qui est mobile entre une position déployée et une position rétractée pour permettre sa coopération avec ladite structure de gâche et assurer le verrouillage dudit ouvrant de barrière dans au moins une position de fermeture.
- selon une forme de réalisation particulière, ledit élément de verrouillage de la structure de pêne peut se prolonger par un organe allongé monté mobile à coulissement axial dans une douille de guidage, lequel organe allongé est soumis à l'action de moyens de rappel élastiques qui tendent à ramener ledit élément de verrouillage dans sa position déployée ; et l'organe allongé peut être muni d'une poignée de manoeuvre pour permettre la mise en position rétractée dudit élément de verrouillage ;
- le dispositif de verrouillage d'ouvrant de barrière est adapté pour permettre le passage de l'élément de verrouillage de la structure de pêne d'un côté à l'autre dudit moyen de butée fixe de la structure de gâche.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description détaillée de l'invention

De plus, diverses autres caractéristiques de l'invention ressortent de la description annexée effectuée en référence aux dessins qui illustrent des formes, non limitatives, de réalisation de l'invention et où :
[Fig. 1] est une vue partielle, en perspective, d'une barrière constituée d'un ouvrant de barrière et d'un poteau vertical formant dormant de barrière, équipés d'un dispositif de verrouillage d'ouvrant conforme à l'invention, la barrière étant illustrée ici dans une situation dans laquelle ledit ouvrant de barrière est fermé par rapport au poteau vertical formant dormant de barrière ;
[Fig. 2] est une vue en perspective de la structure de gâche du dispositif de verrouillage d'ouvrant de la figure 1, représentée de manière isolée ;
[Fig. 3] montre en perspective la barrière de la figure 1, illustrée ici dans une situation dans laquelle l'ouvrant de barrière est ouvert d'un premier côté par rapport au poteau vertical formant dormant de barrière ;
[Fig. 4] montre la barrière de la figure 3, illustrée dans une situation dans laquelle l'ouvrant de barrière est en cours de fermeture depuis ledit premier côté ;
[Fig. 5] montre la barrière de la figure 4, illustrée dans une situation dans laquelle l'ouvrant de barrière est fermé depuis ledit premier côté ;
[Fig. 6] montre la barrière dans la position de la figure 5, selon une autre perspective ;
[Fig. 7] est une vue de la même barrière, illustrée ici avec sa structure de pêne en position rétractée/désactivée ;
[Fig. 8] est une vue en perspective de la même barrière dans une situation dans laquelle l'ouvrant de barrière a été pivoté de l'autre côté (second côté) du poteau vertical formant dormant de barrière ;
[Fig. 9] montre la barrière de la figure 8, illustrée dans une situation dans laquelle l'ouvrant de barrière est en cours de fermeture depuis ledit second côté ;
[Fig. 10] montre la barrière de la figure 9, illustrée dans une situation dans laquelle l'ouvrant de barrière est fermé depuis ledit second côté ;
[Fig. 11] est une vue en perspective d'une variante de réalisation d'une structure de gâche conforme à l'invention.

Il est à noter que, sur ces figures, les éléments structurels et/ou fonctionnels communs aux différentes variantes peuvent présenter les mêmes références.

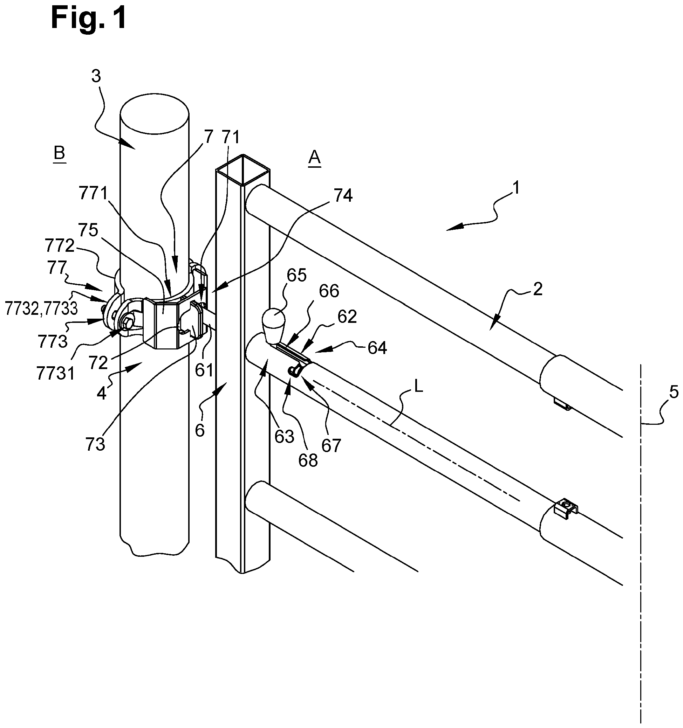

La barrière 1 illustrée sur la figure 1 peut faire office de porte pour un enclos destiné à cloisonner des animaux, par exemple des bovins.

La barrière 1 comprend un ouvrant de barrière 2 et un poteau vertical 3 formant dormant de barrière, équipés d'un dispositif de verrouillage d'ouvrant 4 adapté pour verrouiller l'ouvrant de barrière 2 en position de fermeture sur le dormant de barrière 3.

La barrière 1 est ici illustrée dans une situation dans laquelle l'ouvrant de barrière 2 est fermé par rapport au poteau vertical formant dormant de barrière 3 au moyen du dispositif de verrouillage d'ouvrant 4.

A son autre extrémité, l'ouvrant de barrière 2 est monté pivotant, autour d'un axe de pivotement vertical schématisé en 5, sur une structure support non représentée (par exemple un poteau vertical ou un mur).

L'ouvrant de barrière 2 est du type apte à pivoter autour de l'axe de pivotement 5 de sorte à permettre son ouverture d'un côté et de l'autre d'au moins une position de fermeture. Partant de la position de fermeture illustrée sur la figure 1, l'ouvrant de barrière 2 a donc la possibilité de pivoter dans les deux sens, d'un premier côté A ou d'un second côté B du poteau vertical 3, cela en fonction des besoins d'ouverture d'un utilisateur, par exemple pour passer lui-même d'un côté à l'autre de la barrière, ou encore pour transférer des animaux d'un côté ou de l'autre de la barrière.

Le dispositif de verrouillage d'ouvrant 4 comprend une structure de pêne 6 solidaire de l'ouvrant de barrière 2, qui coopère avec une structure de gâche 7 solidaire du poteau vertical 3.

La structure de pêne 6 comprend un élément de verrouillage 61 qui est mobile entre une position déployée et une position rétractée pour permettre sa coopération avec la structure de gâche 7 et assurer le verrouillage de l'ouvrant de barrière 2 dans une position de fermeture.

L'élément de verrouillage 61 de la structure de pêne 6 se présente sous la forme d'un doigt saillant d'axe longitudinal L, mobile en translation axiale selon cet axe longitudinal L pour occuper ses positions déployée et rétractée.

Pour cela, l'élément de verrouillage 61 se prolonge (de manière classique) par un organe allongé 62 monté mobile à coulissement axial dans une douille de guidage 63, et qui est soumis à l'action de moyens de rappel élastiques 64 (intégrés dans la douille de guidage 63) qui tendent à ramener ledit élément de verrouillage 61 dans sa position déployée.

Les moyens de rappel élastiques 64 se présentent ici sous la forme d'un ressort spirale interposé entre l'organe allongé 62 et une butée ménagée dans la douille de guidage 63.

L'organe allongé 62 est muni d'une poignée de manoeuvre 65 pour permettre la mise en position rétractée de l'élément de verrouillage 61.

La base de la poignée de manoeuvre 65 traverse une lumière longitudinale 66 ménagée dans la douille de guidage 63 pour permettre la commande en translation de l'élément de verrouillage 61 et de l'organe allongé 62 associé, au sein de la douille de guidage 63. De manière classique, l'extrémité arrière de la lumière longitudinale 66 se prolonge par un tronçon de lumière 67 à l'équerre, qui s'étend dans les deux directions, et dont les deux extrémités comportent une encoche de verrouillage 68, pour permettre le verrouillage de la structure de pêne 6 en position rétractée de l'élément de verrouillage 61. Ce verrouillage de l'élément de verrouillage 61 en position rétractée est réalisé par la base de la poignée de manoeuvre 65 qui, après passage au travers du tronçon de lumière 67 par pivotement d'un côté ou de l'autre, vient se positionner au sein de l'une des encoches de verrouillage 68.

La douille de guidage 63 est ici formée en partie par l'une des traverses tubulaires horizontales de l'ouvrant de barrière 2.
Dans une variante de réalisation, la douille de guidage peut être constituée par une portion tubulaire dédiée.

Conformément à l'invention, la structure de gâche 7 comprend un premier logement de pêne 71 adapté pour coopérer avec l'élément de verrouillage 61 de la structure de pêne 6, un second logement de pêne 72 également adapté pour coopérer avec ledit élément de verrouillage 61 de la structure de pêne 6, et un moyen de butée fixe 73 pour l'élément de verrouillage 61 de la structure de pêne 6, situé entre ledit premier logement de pêne 71 et ledit second logement de pêne 72.

Comme expliqué plus loin dans la description, une partie au moins du moyen de butée fixe 73 s'étend en saillie par rapport au premier logement de pêne 71 et par rapport au second logement de pêne 72. Une telle extension en saillie est adaptée pour optimiser la fonction « butée » du moyen de butée fixe 73 par rapport à l'élément de verrouillage 61 de la structure de pêne 6.

D'autre part, le moyen de butée fixe 73 comprend une première partie constituant une bordure de logement dudit premier logement de pêne 71, et une seconde partie constituant une bordure de logement dudit second logement de pêne 72.

De plus, la structure de gâche 7 comprend :
- une première rampe de guidage de pêne 74 située sur le côté dudit premier logement de pêne 71 qui est opposé au moyen de butée fixe 73, et
- une seconde rampe de guidage de pêne 75 située sur le côté dudit second logement de pêne 72 qui est opposé audit moyen de butée fixe 73.

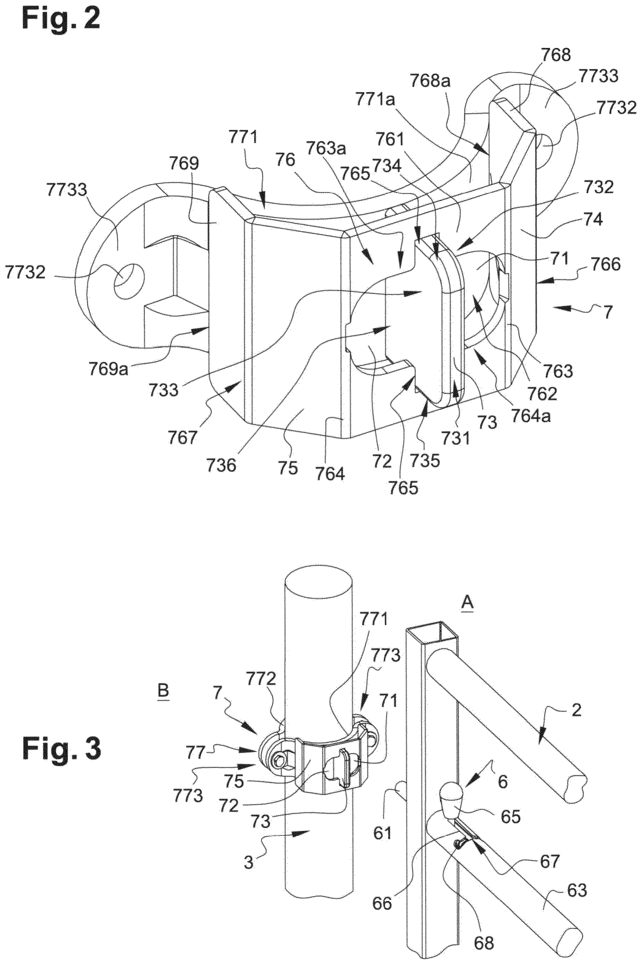

La structure de gâche 7 du dispositif de verrouillage 4 illustré sur la figure 1 est représentée de manière isolée sur la figure 2.

Cette structure de gâche 7 comprend une embase de gâche 76, réalisée en tôle métallique pliée, par exemple en acier galvanisé.

L'embase de gâche 76 comprend un plateau 761, plan, muni d'une ouverture 762 dans la partie centrale de laquelle est fixé un organe rapporté formant ledit moyen de butée fixe 73 ; cet organe rapporté 73 sépare en deux ladite ouverture 762 pour constituer ledit premier logement de pêne 71 et ledit second logement de pêne 72.

Les côtés latéraux 763 et 764 du plateau 761 se prolongent par des panneaux latéraux monoblocs formant, d'un côté, la première rampe de guidage de pêne 74 et, de l'autre côté, la seconde rampe de guidage de pêne 75.

Les deux rampes de guidage de pêne 74 et 75 s'étendent selon un plan incliné de l'ordre de 40 à 50°, de préférence voisin de 45°, par rapport au plan du plateau 761.

D'autre part les côtés latéraux 766 et 767 des deux rampes de guidage de pêne 74 et 75, qui sont situés à distance du plateau 761, se prolongent par des volets d'extrémité 768, 769 monoblocs, munis chacun d'une bordure d'extrémité libre 768a, 769a. Ces volets d'extrémité 768, 769 s'étendent ici dans des plans perpendiculaires au plan du plateau 761.

Dans sa position complètement déployée, l'extrémité de l'élément de verrouillage 61 est adaptée pour venir s'étendre jusqu'au niveau des première et seconde rampes de guidage de pêne 74, 75, de sorte à pouvoir coopérer avec ces dernières lors des opérations de fermeture de l'ouvrant de barrière 2, tel que décrit dans la suite de la description.

Le moyen de butée fixe 73 consiste ici en une platine de butée 73 métallique qui s'étend dans un plan perpendiculaire au plan du plateau 761. Cette platine de butée 73 comprend une partie d'extrémité avant 731 qui s'étend en saillie par rapport au plateau 761 et auxdits premier et second logements de pêne 71, 72, en direction de l'élément de verrouillage 61 de la structure de pêne 6.

Comme on peut le voir sur la figure 2, la platine de butée 73 est positionnée perpendiculairement au plan de l'ouverture 762 ménagée dans le plateau 761, de sorte à s'étendre verticalement en position normale d'utilisation. La bordure supérieure 734 et la bordure inférieure 735 de la platine de butée 73 sont fixées par soudage, respectivement sur la bordure supérieure 763a et sur la bordure inférieure 764a de l'ouverture 762. De préférence la bordure supérieure 763a et la bordure inférieure 764a de l'ouverture 762 comportent des réservations 765 dans lesquelles sont encastrées les bordures supérieure 734 et inférieure 735 de la platine de butée 73, pour optimiser le positionnement et la solidarisation de cette dernière par soudage.

Comme précisé ci-dessus, les côtés latéraux 732 et 733 de la platine de butée 73 constituent, respectivement, une bordure de logement du premier logement de pêne 71, et une bordure de logement du second logement de pêne 72.

Les logements de pêne 71 et 72 sont formés par les ouvertures 71 , 72 du plateau 761 de l'embase de gâche 76, situés de chaque côté du moyen de butée fixe 73, et également par un volume arrière laissé libre derrière le plateau 761.
La profondeur de ces logements est adaptée notamment selon la sécurité de verrouillage recherchée.

D'autre part, la forme des ouvertures 71 et 72 est adaptée à la section transversale de l'élément de verrouillage 61.

La structure de gâche 7 comprend encore des moyens de fixation 77 pour sa fixation sur un support, en l'occurrence, ici sur le poteau vertical 3 de section transversale circulaire.

Les moyens de fixation 77 de la structure de gâche 7 illustrée sur les figures 1 et 2 consistent en une structure de bridage formée d'une première demi-bride 771, sur laquelle est fixée l'embase de gâche 76, et d'une seconde demi-bride 772, lesquelles première et seconde demi-brides 771, 772 sont munies de moyens d'assemblage 773 entre elles par boulonnage. En l'occurrence les moyens d'assemblage 773 consistent en deux boulons 7731 coopérant avec des orifices 7732 ménagés dans des pattes d'extrémité 7733 des deux demi-brides 771, 772.

La première demi-bride 771 et la seconde demi-bride 772 ont ici chacune une forme générale en demi-cercle du fait de de la section transversale circulaire du poteau 3 support. En variante de réalisation, les demi-brides de la structure de bridage peuvent être en forme générale de Vé ou de U pour une fixation sur un poteau support de section transversale carrée.

Comme illustré sur la figure 2, l'embase de gâche 76 est assemblée avec la demi-bride 771 par soudage des bordures d'extrémités libres 768a, 769a des volets monoblocs 768, 769 sur la face externe 771a de ladite demi-bride 771.

En outre, de sorte à renforcer la structure, la partie d'extrémité arrière 736 de la platine de butée 73 est également fixée par soudage sur la face externe 771a de la première demi-bride 771.

Dans une variante de réalisation l'embase de gâche 76 peut ne pas comporter les volets monoblocs 768 et 769. Dans ce cas, l'embase de gâche peut être assemblée avec la première demi-bride 771 par soudage des bordures d'extrémités libres des rampes de guidage de pêne 74 et 75 sur la face externe 771a de cette première demi-bride 771.

Sur la figure 1 l'ouvrant de barrière 2 est représenté en position fermée, l'élément de verrouillage 61 de la structure de pêne 6 étant introduit dans le logement de pêne 71 de la structure de gâche 7.

Partant de cette position fermée, comme illustré sur la figure 3, l'ouvrant de barrière 2 peut être ouvert par pivotement vers le premier côté A du poteau 3, après extraction ou désengagement de l'élément de verrouillage 61 hors de son logement d'accueil 71, en utilisant la poignée de manoeuvre 65.

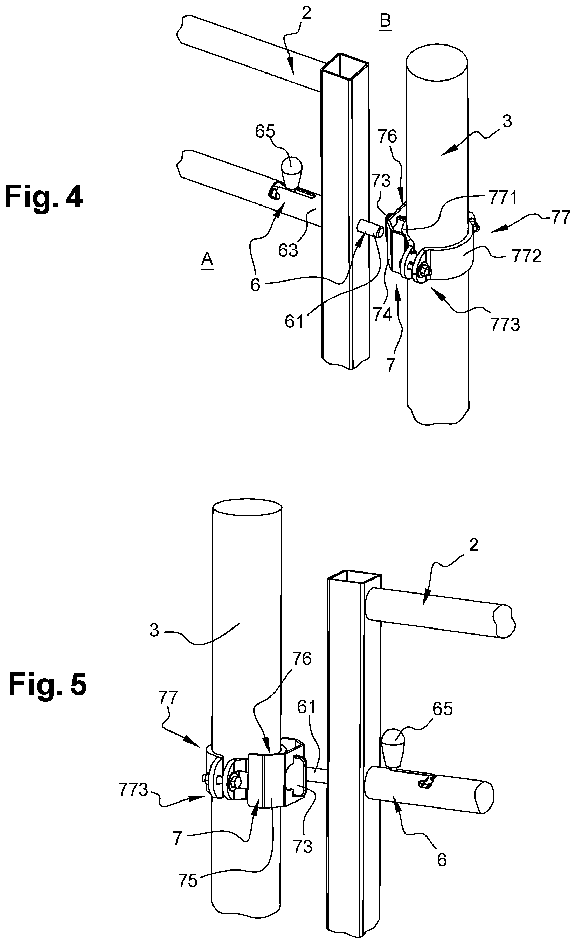

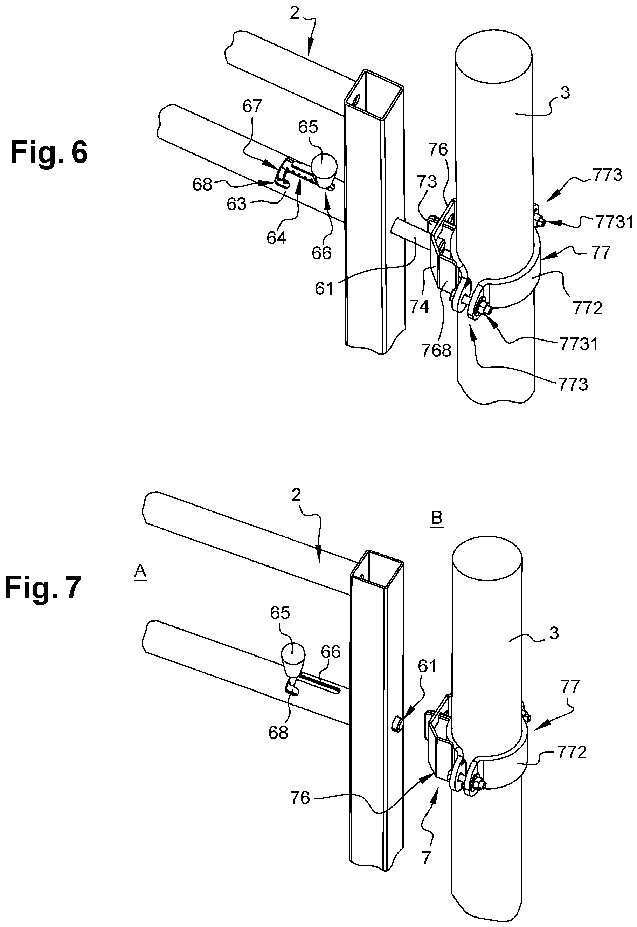

Pour fermer à nouveau l'ouvrant de barrière 2, l'opérateur peut, soit le faire pivoter tout en actionnant l'élément de verrouillage 61 au moyen de la poignée de manoeuvre 65 pour le faire coopérer avec le logement de pêne 71, soit simplement pousser l'ouvrant de barrière 2 en direction du poteau 3 de sorte à obtenir une fermeture « automatique ».
Dans ce dernier cas, lorsque la structure de pêne 6 arrive à proximité de la structure de gâche 7, l'extrémité libre de l'élément de verrouillage 61 vient en contact avec la première rampe de guidage de pêne 74 ; l'élément de verrouillage 61 se rétracte, guidé par la douille de guidage 63, à l'encontre de l'action des moyens de rappel élastiques 64 (figure 4), jusqu'à ce qu'il atteigne le premier logement de pêne 71. Alors l'élément de verrouillage 61 se déploie et pénètre dans le logement de pêne 71 sous l'action des moyens de rappel élastiques 64, pour obtenir la position fermée de l'ouvrant de barrière 2 illustrée sur les figures 5 et 6. Dans le cas d'une poussée sévère ou violente sur l'ouvrant de barrière 2, le blocage de l'élément de verrouillage 61 est sécurisé par l'élément de butée fixe 73 qui s'étend en saillie du plateau 761.

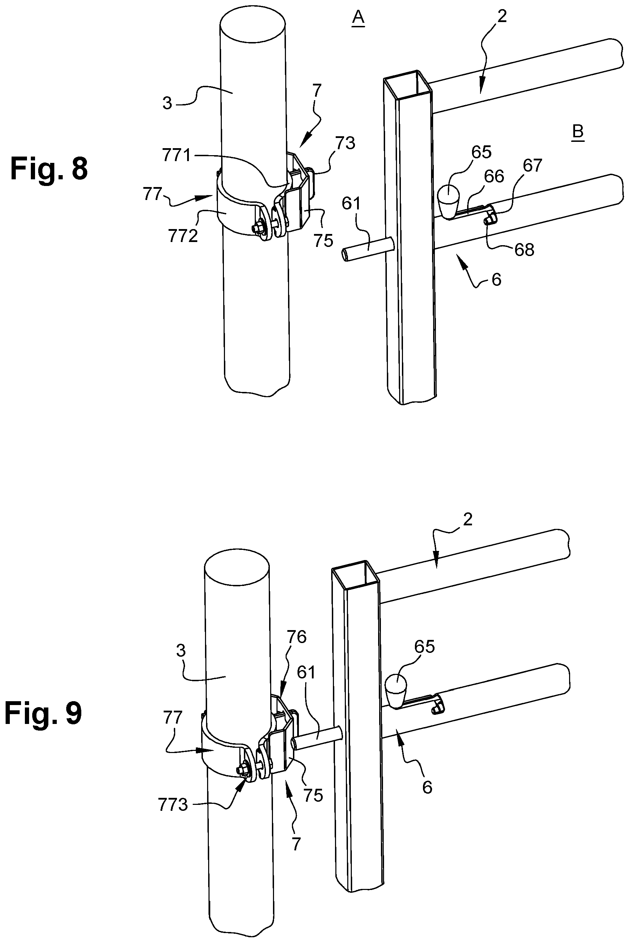

L'ouvrant de barrière 2 peut être ouvert dans l'autre sens, par pivotement vers le second côté B du poteau 3, après extraction ou désengagement de l'élément de verrouillage 61 hors de son logement d'accueil 71, en utilisant la poignée de manoeuvre 65 (figures 7 et 8).

Le dispositif de verrouillage d'ouvrant de barrière 4 selon l'invention est adapté pour permettre le passage de l'élément de verrouillage 61 de la structure de pêne 6 d'un côté à l'autre du moyen de butée fixe 73 de la structure de gâche 7.

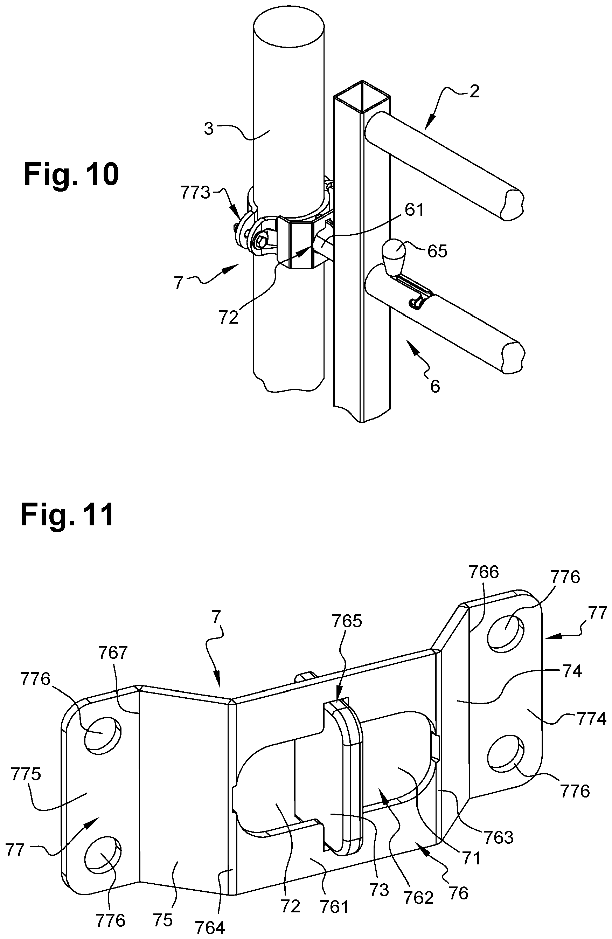

Partant de cette position ouverte de l'ouvrant de barrière 2 du second côté B du poteau 3, pour fermer à nouveau cet ouvrant de barrière 2, l'opérateur peut, soit le faire pivoter tout en actionnant l'élément de verrouillage 61 au moyen de la poignée de manoeuvre 65 pour le faire coopérer avec le logement de pêne 72, soit simplement pousser l'ouvrant de barrière 2 en direction du poteau 3 de sorte à obtenir sa fermeture « automatique ».
Dans ce dernier cas, lorsque la structure de pêne 6 arrive à proximité de la structure de gâche 7, l'extrémité libre de l'élément de verrouillage 61 vient en contact avec la seconde rampe de guidage de pêne 75 (figure 9) ; l'élément de verrouillage 61 se rétracte, guidé par la douille de guidage 63, à l'encontre de l'action des moyens de rappel élastiques 64, jusqu'à ce qu'il atteigne le second logement de pêne 72.
Alors l'élément de verrouillage 61 se déploie et pénètre dans le logement de pêne 72 sous l'action des moyens de rappel élastiques 64, pour obtenir la position fermée de l'ouvrant de barrière 2 illustrée sur la figure 10. Dans le cas d'une poussée sévère ou violente sur l'ouvrant de barrière 2, le blocage de l'élément de verrouillage 61 est sécurisé par l'élément de butée fixe 73 qui s'étend en saillie du plateau 761.

Avec le dispositif de verrouillage d'ouvrant 4 selon l'invention, l'ouvrant de barrière 2 comprend deux positions de fermeture légèrement décalées angulairement l'une par rapport à l'autre (séparées d'une distance angulaire correspondant à l'épaisseur de la platine de butée 73), selon que l'élément de verrouillage 61 est engagé dans le premier logement de pêne 71 ou dans le second logement de pêne 72.

La figure 11 illustre une variante de réalisation de la structure de gâche 7, destinée à une fixation sur un support plan, par exemple une paroi ou un mur (non représenté).

Comme pour le mode de réalisation illustré sur les figures 1 à 10, la structure de gâche 7 illustrée sur cette figure 11 comprend une embase de gâche 76 comprenant elle-même un plateau 761, central, dont les côtés latéraux 763 et 764 se prolongent par des panneaux latéraux formant la première rampe de guidage de pêne 74 et la seconde rampe de guidage de pêne 75.

Le plateau 761 est muni d'une ouverture 762 dans la partie centrale de laquelle est fixé un organe rapporté formant le moyen de butée fixe 73 ; et cet organe rapporté 73 sépare en deux l'ouverture centrale 762 pour constituer le premier logement de pêne 71 et le second logement de pêne 72.

Ici, les moyens de fixation 77, pour la fixation sur un support plan en forme de paroi ou de mur, consistent en deux ailes latérales 774 et 775 qui prolongent les extrémités latérales 766 et 767 des deux rampes de guidage de pêne 74 et 75. Ces deux ailes latérales 774 et 775 s'étendent dans un même plan et sont munies chacune d'au moins un orifice 776 adapté pour le passage d'une vis de fixation (non représentée).

On obtient un dispositif de verrouillage d'ouvrant et une structure de gâche de conception très simple et limitant la présence d'organes saillants, qui permettent une ouverture de l'ouvrant dans les deux sens avec une fermeture efficace et sécurisée.

## Revendications

1. Structure de gâche (7) pour un dispositif de verrouillage (4) d'ouvrant de barrière (2),
lequel ouvrant de barrière (2) est apte à pivoter autour d'un axe de pivotement (5), pour permettre son ouverture d'un côté et de l'autre d'au moins une position de fermeture,
lequel dispositif de verrouillage (4) comprend une structure de pêne (6) solidaire dudit ouvrant de barrière (2), laquelle structure de pêne (6) comprend un élément de verrouillage (61) qui est mobile entre une position déployée et une position rétractée pour permettre sa coopération avec ladite structure de gâche (7) et assurer le verrouillage dudit ouvrant de barrière (2) dans au moins une position de fermeture,
laquelle structure de gâche (7) comprend un premier logement de pêne (71) adapté pour coopérer avec ledit élément de verrouillage (61) de ladite structure de pêne (6), un second logement de pêne (72) adapté pour coopérer avec ledit élément de verrouillage (61) de ladite structure de pêne (6), et un moyen de butée fixe (73) pour ledit élément de verrouillage (61) de la structure de pêne (6), situé entre ledit premier logement de pêne (71) et ledit second logement de pêne (72),
ladite structure de gâche (7) comprenant encore :
- une première rampe de guidage de pêne (74) située sur le côté dudit premier logement de pêne (71) qui est opposé audit moyen de butée fixe (73), et
- une seconde rampe de guidage de pêne (75) située sur le côté dudit second logement de pêne (72) qui est opposé audit moyen de butée fixe (73),
**caractérisé en ce que** ladite structure de gâche (7) comprend une embase de gâche (76) comprenant un plateau (761) plan muni d'une ouverture (762) dans la partie centrale de laquelle est fixé un organe rapporté formant ledit moyen de butée fixe (73), lequel moyen de butée fixe (73) sépare en deux ladite ouverture (762) pour constituer ledit premier logement de pêne (71) et ledit second logement de pêne (72),
les côtés latéraux (763, 764) dudit plateau (761) se prolongeant par des panneaux latéraux formant ladite première rampe de guidage de pêne (74) et ladite seconde rampe de guidage de pêne (75).

2. Structure de gâche (7) selon la revendication 1, **caractérisée en ce qu'**une partie (731) au moins dudit moyen de butée fixe (73) s'étend en saillie par rapport auxdits premier et second logements de pêne (71, 72).

3. Structure de gâche (7) selon l'une quelconque des revendications 1 ou 2, **caractérisée en ce que** ledit moyen de butée fixe (73) comprend une première partie (732) constituant une bordure de logement dudit premier logement de pêne (71), et une seconde partie (733) constituant une bordure de logement dudit second logement de pêne (72).

4. Structure de gâche (7) selon la revendication 1, **caractérisée en ce que** ledit moyen de butée fixe (73) consiste en une platine de butée s'étendant dans un plan perpendiculaire au plan dudit plateau (761), laquelle platine de butée (73) comprend une partie d'extrémité avant (731) qui s'étend en saillie par rapport audit plateau (761) et auxdits premier et second logements de pêne (71, 72).

5. Structure de gâche (7) selon l'une quelconque des revendications 1 à 4, **caractérisée en ce qu'**elle comprend des moyens de fixation (77) pour sa fixation sur un support (3).

6. Structure de gâche (7) selon la revendication 5, **caractérisée en ce que** lesdits moyens de fixation (77) pour la fixation sur un support consistent en deux ailes latérales (774, 775) qui prolongent lesdits panneaux latéraux (74, 75) formant ladite première rampe de guidage de pêne (74) et ladite seconde rampe de guidage de pêne (75), lesquelles ailes latérales (774, 775) s'étendent dans un même plan et sont munies chacune d'au moins un orifice (776) adapté pour le passage d'une vis de fixation, en vue de la fixation sur un support en forme de paroi ou de mur.

7. Structure de gâche (7) selon la revendication 5, **caractérisée en ce que** lesdits moyens de fixation (77) pour la fixation sur un support consistent en une structure de bridage (77) adaptée pour une fixation sur un poteau vertical (3), laquelle structure de bridage (77) est formée d'une première demi-bride (771) sur laquelle est fixée ladite embase de gâche (76) et d'une seconde demi-bride (772), lesquelles première et seconde demi-brides (771, 772) sont munies de moyens d'assemblage (773) entre elles par boulonnage.

8. Structure de gâche (7) selon la revendication 7 prise sous la dépendance de la revendication 4, **caractérisée en ce que** ladite platine de butée (73) comprend une partie d'extrémité arrière (736) fixée sur ladite première demi-bride (771).

9. Dispositif de verrouillage (4) d'ouvrant de barrière (2), lequel ouvrant de barrière (2) est apte à pivoter autour d'un axe de pivotement (5) pour permettre son ouverture d'un côté et de l'autre d'au moins une position de fermeture,
lequel dispositif de verrouillage d'ouvrant (4) comprend :
- une structure de gâche (7) selon l'une quelconque des revendications 1 à 8, et
- une structure de pêne (6) solidaire dudit ouvrant de barrière (2), laquelle structure de pêne (6) comprend un élément de verrouillage (61) qui est mobile entre une position déployée et une position rétractée pour permettre sa coopération avec ladite structure de gâche (7) et assurer le verrouillage dudit ouvrant de barrière (2) dans au moins une position de fermeture.

10. Dispositif de verrouillage (4) d'ouvrant de barrière (2) selon la revendication 9, **caractérisé en ce que** ledit élément de verrouillage (61) de la structure de pêne (6) se prolonge par un organe allongé (62) monté mobile à coulissement axial dans une douille de guidage (63), lequel organe allongé (62) est soumis à l'action de moyens de rappel élastiques (64) qui tendent à ramener ledit élément de verrouillage (61) dans sa position déployée, et lequel organe allongé (62) est muni d'une poignée de manoeuvre (65) pour permettre la mise en position rétractée dudit élément de verrouillage (61).

11. Dispositif de verrouillage (4) d'ouvrant de barrière (2) selon l'une quelconque des revendications 9 ou 10, **caractérisé en ce qu'**il est adapté pour permettre le passage de l'élément de verrouillage (61) de la structure de pêne (6) d'un côté à l'autre dudit moyen de butée fixe (73) de la structure de gâche (7).

## Patentansprüche

1. Schließblechstruktur (7) für eine Verriegelungsvorrichtung (4) für einen Öffnungsflügel mit Barrierefunktion (2),
wobei der Öffnungsflügel mit Barrierefunktion (2) geeignet ist, um eine Schwenkachse (5) zu schwenken, um dessen Öffnung zur einen Seite und zur anderen Seite wenigstens einer Schließposition zu ermöglichen,
wobei die Verriegelungsvorrichtung (4) eine mit dem Öffnungsflügel mit Barrierefunktion (2) verbundene Riegelstruktur (6) aufweist, wobei die Riegelstruktur (6) ein Verriegelungselement (61) aufweist, das zwischen einer ausgefahrenen Position und einer eingefahrenen Position bewegbar ist, um dessen Zusammenwirken mit der Schließblechstruktur (7) zu ermöglichen und das Verriegeln des Öffnungsflügels mit Barrierefunktion (2) in mindestens einer Schließposition sicherzustellen,
wobei die Schließblechstruktur (7) eine erste Riegelaufnahme (71), die dazu ausgelegt ist, mit dem Verriegelungselement (61) der Riegelstruktur (6) zusammenzuwirken, eine zweite Riegelaufnahme (72), die dazu ausgelegt ist, mit dem Verriegelungselement (61) der Riegelstruktur (6) zusammenzuwirken, und ein zwischen der ersten Riegelaufnahme (71) und der zweiten Riegelaufnahme (72) gelegenes festes Anschlagmittel (73) für das Verriegelungselement (61) der Riegelstruktur (6) aufweist,
wobei die Schließblechstruktur (7) außerdem
- eine erste Riegelführungsrampe (74), die auf der Seite der ersten Riegelaufnahme (71) angeordnet ist, die vom festen Anschlagmittel (73) abgewandt ist, und
- eine zweite Riegelführungsrampe (75), die auf der Seite der zweiten Riegelaufnahme (72) angeordnet ist, die vom festen Anschlagmittel (73) abgewandt ist,
aufweist,
**dadurch gekennzeichnet, daß** die Schließblechstruktur (7) eine Schließblechbasis (76) mit einer ebenen Platte (761) aufweist, die mit einer Öffnung (762) versehen ist, in deren mittlerem Teil ein hinzugefügtes Organ befestigt ist, das das feste Anschlagmittel (73) bildet, wobei das feste Anschlagmittel (73) die Öffnung (762) in zwei Teile teilt, um die erste Riegelaufnahme (71) und die zweite Riegelaufnahme (72) zu bilden,
wobei die seitlichen Seiten (763, 764) der Platte (761) durch Seitenplatten verlängert sind, die die erste Riegelführungsrampe (74) und die zweite Riegelführungsrampe (75) bilden.

2. Schließblechstruktur (7) gemäß Anspruch 1, **dadurch gekennzeichnet, daß** sich mindestens ein Teil (731) des festen Anschlagmittels (73) gegenüber der ersten und der zweiten Riegelaufnahme (71, 72) hervorstehend erstreckt.

3. Schließblechstruktur (7) gemäß einem der Ansprüche 1 oder 2, **dadurch gekennzeichnet, daß** das feste Anschlagmittel (73) einen ersten Teil (732), der einen Aufnahmerand der ersten Riegelaufnahme (71) bildet, und einen zweiten Teil, der einen Aufnahmerand der zweiten Riegelaufnahme (72) bildet, aufweist.

4. Schließblechstruktur (7) gemäß Anspruch 1, **dadurch gekennzeichnet, daß** das feste Anschlagmittel (73) aus einer Anschlagplatine besteht, die sich in einer zur Ebene der Platte (761) senkrechten Ebene erstreckt, wobei die Anschlagplatine (73) einen vorderen Endabschnitt (731) aufweist, der sich gegenüber der Platte (761) und der ersten und der zweiten Riegelaufnahme (71, 72) hervorstehend erstreckt.

5. Schließblechstruktur (7) gemäß einem der Ansprüche 1 bis 4, **dadurch gekennzeichnet, daß** sie Befestigungsmittel (77) für ihre Befestigung auf einem Träger (3) aufweist.

6. Schließblechstruktur (7) gemäß Anspruch 5, **dadurch gekennzeichnet, daß** die Befestigungsmittel (77) für die Befestigung auf einem Träger aus zwei Seitenflügeln (774, 775) bestehen, die die Seitenplatten (74, 75) verlängern, die die erste Riegelführungsrampe (74) und die zweite Riegelführungsrampe (75) bilden, wobei sich die Seitenflügel (774, 775) in ein und derselben Ebene erstrecken und jeweils mit mindestens einem Loch (776) versehen sind, das für das Hindurchgehen einer Befestigungsschraube für die Befestigung auf einem Träger in Form einer Wand oder einer Mauer ausgelegt ist.

7. Schließblechstruktur (7) gemäß Anspruch 5, **dadurch gekennzeichnet, daß** die Befestigungsmittel (77) für die Befestigung auf einem Träger aus einer für eine Befestigung an einem senkrechten Pfahl (3) ausgelegten Spannstruktur (77) bestehen, wobei die Spannstruktur (77) aus einem ersten Halbflansch (771), an dem die Schließblechbasis (76) befestigt ist, und einem zweiten Halbflansch (772) besteht, wobei der erste und der zweite Halbflansch (771, 772) mit Mitteln (773) zum Zusammenbauen der beiden durch Verschrauben versehen sind.

8. Schließblechstruktur (7) gemäß Anspruch 7 in Abhängigkeit von Anspruch 4, **dadurch gekennzeichnet, daß** die Anschlagplatine (73) einen auf dem ersten Halbflansch (771) befestigten rückwärtigen Endabschnitt (736) aufweist.

9. Vorrichtung (4) zum Verriegeln eines Öffnungsflügels mit Barrierefunktion (2), wobei der Öffnungsflügel mit Barrierefunktion (2) geeignet ist, um eine Schwenkachse (5) zu schwenken, um dessen Öffnung zur einen Seite und zur anderen Seite wenigstens einer Schließposition zu ermöglichen,
wobei die Verriegelungsvorrichtung (4) eines Öffnungsflügels
- eine Schließblechstruktur (7) gemäß einem der Ansprüche 1 bis 8 und
- eine mit dem Öffnungsflügel mit Barrierefunktion (2) fest verbundene Riegelstruktur (6) aufweist, wobei die Riegelstruktur (6) ein Verriegelungselement (61) aufweist, das zwischen einer ausgefahrenen Position und einer eingefahrenen Position bewegbar ist, um dessen Zusammenwirken mit der Schließblechstruktur (7) zu ermöglichen und das Verriegeln des Öffnungsflügels mit Barrierefunktion (2) in mindestens einer Schließposition sicherzustellen.

10. Verriegelungsvorrichtung (4) für einen Öffnungsflügel mit Barrierefunktion (2) gemäß Anspruch 9, **dadurch gekennzeichnet, daß** das Verriegelungselement (61) der Riegelstruktur (6) durch ein längliches Organ (62) verlängert ist, das in einer Führungshülse (63) axial verschiebbar beweglich montiert ist, wobei das längliche Organ (62) elastischen Rückstellmitteln (64) unterworfen ist, die das Verriegelungselement (61) in dessen ausgefahrene Position zurückstellen wollen, und wobei das längliche Organ (62) mit einem Bedienungshandgriff (65) versehen ist, um das Verriegelungselement (61) in die eingefahrene Position bringen zu können.

11. Verriegelungsvorrichtung (4) für einen Öffnungsflügel mit Barrierefunktion (2) gemäß einem der Ansprüche 9 oder 10, **dadurch gekennzeichnet, daß** sie dazu ausgelegt ist, einen Übergang des Verriegelungselements (61) der Riegelstruktur (6) von der einen Seite zur anderen Seite des festen Anschlagmittels (73) der Schließblechstruktur (7) zu ermöglichen.

## Claims

1. A strike structure (7) for a locking device (4) of a gate leaf (2),
said gate leaf (2) being able to pivot about a pivoting axis (5), to allow it to be open on either side of at least one closing position,
said locking device (4) comprising a bolt structure (6) integral with said gate leaf (2), said bolt structure (6) comprising a locking element (61) that is movable between an extended position and a retracted position to allow the cooperation thereof with said strike structure (7) and to ensure the locking of said gate leaf (2) in at least one closing position,
said strike structure (7) comprising a first bolt accommodation (71) adapted to cooperate with said locking element (61) of said bolt structure (6), a second bolt accommodation (72) adapted to cooperate with said locking element (61) of said bolt structure (6), and a fixed stop means (73) for said locking element (61) of the bolt structure (6), located between said first bolt accommodation (71) and said second bolt accommodation (72),
said strike structure (7) also comprising:
- a first bolt guiding ramp (74) located on the side of said first bolt accommodation (71) that is opposed to said fixed stop means (73), and
- a second bolt guiding ramp (75) located on the side of said second bolt accommodation (72) that is opposed to said fixed stop means (73),
**characterized in that** said strike structure (7) comprises a strike base (76) comprising a flat plate (761) provided with an opening (762) in the central portion of which is attached an added member forming said fixed stop means (73), said fixed stop means (73) dividing said opening (762) into two parts to form said first bolt accommodation (71) and said second bolt accommodation (72),
the lateral sides (763, 764) of said plate (761) being extended by side panels forming said first bolt guiding ramp (74) and said second bolt guiding ramp (75).

2. The strike structure (7) according to claim 1, **characterized in that** a portion (731) at least of said fixed stop means (73) protrudes from said first and second bolt accommodations (71, 72).

3. The strike structure (7) according to any one of claims 1 or 2, **characterized in that** said fixed stop means (73) comprises a first portion (732) forming an accommodation edge of said first bolt accommodation (71), and a second portion (733) forming an accommodation edge of said second bolt accommodation (72).

4. The strike structure (7) according to claim 1, **characterized in that** said fixed stop means (73) consist of a stop plate extending in a plane perpendicular to the plane of said plate (761), said stop plate (73) comprising a front end portion (731) that protrudes from said plate (761) and from said first and second bolt accommodations (71, 72).

5. The strike structure (7) according to any one of claims 1 to 4, **characterized in that** it comprises fastening means (77) for fixing to a support (3).

6. The strike structure (7) according to claim 5, **characterized in that** said fastening means (77) for fixing to a support consist of two side wings (774, 775) that extend said side panels (74, 75) forming said first bolt guiding ramp (74) and said second bolt guiding ramp (75), said side wings (774, 775) extending in a same plane and being each provided with at least one hole (776) suitable for the passage of a fastening screw, for fixing to a support in the form of a partition or a wall.

7. The strike structure (7) according to claim 5, **characterized in that** said fastening means (77) for fixing to a support consist of a clamping structure (77) suitable for fixing to a vertical post (3), said clamping structure (77) being formed of a first half-clamp (771) on which is attached said strike base (76) and a second half-clamp (772), said first and second half-clamps (771, 772) being provided with assembly means (773) for bolting them together.

8. The strike structure (7) according to claim 7, when depending on claim 4, **characterized in that** said stop plate (73) comprises a rear end portion (736) fixed to said first half-clamp (771).

9. A locking device (4) for a gate leaf (2), wherein said gate leaf (2) is able to pivot about a pivoting axis (5) to allow it to be open on either side of at least one closing position, said leaf locking device (4) comprising:
- a strike structure (7) according to any one of claims 1 to 8, and
- a bolt structure (6) integral with said gate leaf (2), said bolt structure (6) comprising a locking element (61) that is movable between an extended position and a retracted position to allow the cooperation thereof with said strike structure (7) and to ensure the locking of said gate leaf (2) in at least one closing position.

10. The locking device (4) for a gate leaf (2) according to claim 9, **characterized in that** said locking element (61) of the bolt structure (6) is extended by an elongated member (62) mounted for axial sliding in a guiding sleeve (63), said elongated member (62) being subjected to the action of elastic return means (64) that tend to bring said locking element (61) back to its extended position, and said elongated member (62) being provided with an operating handle (65) to allow said locking element (61) to be placed in retracted position.

11. The locking device (4) for a gate leaf (2) according to any one of claims 9 or 10, **characterized in that** it is adapted to allow the passage of the locking element (61) of the bolt structure (6) from one side of said fixed stop means (73) of the strike structure (7) to the other.
